# FASCICULE DE BREVET EUROPEEN

(11) **EP 2 593 743 B1**
(45) Date de publication et mention de la délivrance du brevet: **07.08.2019**
(21) Numéro de dépôt: 11738615.1
(22) Date de dépôt: 08.07.2011
(51) Int. Cl.: F28F 9/02, F28D 9/00, F16L 13/02, F16L 23/00

(54) **DISPOSITIF DE CONNEXION ENTRE UN COMPOSANT D'UNE BOUCLE DE CLIMATISATION ET UN ÉCHANGEUR DE CHALEUR**
VORRICHTUNG ZUR VERBINDUNG ZWISCHEN EINER KOMPONENTE EINES KLIMAANLAGENKREISLAUFES UND EINEM WÄRMETAUSCHER
DEVICE FOR CONNECTION BETWEEN A COMPONENT OF AN AIR-CONDITIONING LOOP AND A HEAT EXCHANGER

(30) Priorité: 15.07.2010 FR 1002979
(43) Date de publication de la demande: 22.05.2013
(73) Titulaire: Valeo Systemes Thermiques, 78320 Le Mesnil Saint Denis (FR)
(72) Inventeur: LEMEE, Jimmy, F-72380 Saint Jean d'Asse (FR); DENOUAL, Christophe, F-72430 Noyen sur Sarthe (FR); POURMARIN, Alain, F-72210 La Suze sur Sarthe (FR)
(74) Mandataire: Neuviale, Bertrand
(86) Numéro de dépôt international: PCT/EP2011/003411
(87) Numéro de publication internationale: WO 2012/007133

(56) Documents cités:
- EP-A2- 0 625 686
- EP-A2- 0 762 072
- WO-A1-03/073022
- US-A- 5 042 577
- US-A1- 2009 236 086

## Description

La présente invention concerne tout d'abord un dispositif de connexion entre un composant d'une boucle de climatisation et un échangeur de chaleur comprenant au moins un canal apte à être parcouru par un fluide.

Une boucle de ce type est parcourue par un fluide réfrigérant. Elle comprend pour cela essentiellement un compresseur, un condenseur (ou un refroidisseur de gaz), un échangeur de chaleur interne, un détendeur et un évaporateur, ainsi que des conduits de liaison entre ces composants. L'échangeur de chaleur interne assure un transfert de chaleur entre des parties à haute pression et à basse pression de la boucle, ceci afin d'améliorer les performances du cycle thermodynamique (puissance frigorifique et efficacité énergétique).

Plus précisément, le fluide réfrigérant à haute pression provenant du compresseur est refroidi dans le condenseur, passe ensuite dans une première partie de l'échangeur interne, puis est détendu par le détendeur. Le fluide à basse pression ainsi obtenu en sortie du détendeur passe à travers l'évaporateur, puis dans une deuxième partie de l'échangeur interne avant de retourner vers le compresseur.

L'échangeur de chaleur interne comprend généralement un conduit de circulation parcouru par un fluide, muni d'un orifice d'entrée du fluide à basse pression, d'un orifice de sortie du fluide à basse pression, d'un orifice de sortie du fluide à haute pression et d'un orifice d'entrée du fluide à haute pression. L'échangeur est ainsi monté en sortie de deux des composants de la boucle de climatisation : d'un côté le condenseur et de l'autre l'évaporateur, dans le but de refroidir le fluide réfrigérant à haute pression sortant du condenseur par le fluide à basse pression sortant de l'évaporateur.

Afin d'assurer la connexion entre l'échangeur et les composants précités de la boucle de climatisation, il est recouru à un dispositif de connexion muni d'un canal d'entrée et d'un canal de sortie destinés à recevoir les fluides à respectivement basse et haute pression, ces canaux étant agencés de manière à être, lorsque le dispositif de connexion est intégré dans la boucle de climatisation, sensiblement en regard des orifices d'entrée et de sortie de l'échangeur, de même que des orifices du condenseur et de l'évaporateur.

Un tel dispositif de connexion présente l'inconvénient d'être monolithique, c'est-à-dire formé en une seule pièce. Or, en fonction de la boucle de climatisation considérée, les différents orifices (de l'échangeur de chaleur et des autres composants) auxquels est relié le dispositif de connexion présentent des configurations différentes. En particulier, si les conduits de circulation de l'échangeur présentent généralement présente une forme standard, il n'en est pas de même des orifices des autres composants.

Il s'en suit que pour une configuration donnée, l'ensemble du dispositif de connexion de l'art antérieur doit être adapté. En d'autres termes, ce dispositif n'autorise pas un certain niveau de standardisation, ce qui ne saurait être satisfaisant, notamment en termes de coûts de fabrication.

De surcroît, un dispositif de connexion de l'art antérieur est usiné en un seul bloc d'aluminium, d'épaisseur élevée, ce qui présente un inconvénient majeur en termes de poids au sein d'un véhicule automobile.

Les documents WO03073022A1 et US2009236086A divulguent des exemples de dispositifs de raccordement entre un échangeur thermique et un composant d'une boucle de climatisation.

La présente invention a pour but de remédier à ces inconvénients et concerne un dispositif de connexion non plus monolithique, mais réalisé en deux pièces différentes qui sont fixées l'une contre l'autre et qui portent respectivement des embouts destinés à l'échangeur de chaleur (de forme standard) et des collerettes destinés aux autres composants de la boucle de climatisation (de forme adaptée à la configuration de la boucle).

A cette fin, selon l'invention, le dispositif de connexion du type défini ci-dessus, c'est-à-dire entre un composant d'une boucle de climatisation et un échangeur de chaleur comprenant au moins un canal apte à être parcouru par un fluide, ledit composant étant des tubes ou conduites de transport d'un fluide, ou encore un détendeur, lequel comprend :
- une pièce interne portant au moins une collerette délimitant au moins en partie ledit canal et apte à coopérer avec un orifice dudit échangeur, et
- une pièce externe, rapportée contre la pièce interne, qui porte au moins un embout délimitant en partie ledit canal et apte à coopérer avec un orifice dudit composant, dans lequel au moins l'une des pièces interne ou externe est munie de moyens de pré-assemblage desdites pièces l'une contre l'autre, lequel est remarquable en ce que les pièces interne et externe sont partiellement solidaires l'une de l'autre par l'intermédiaire de l'une des leurs tranches adjacentes.

Ainsi, grâce à l'invention, on dispose :
- d'un côté, d'une pièce interne destinée exclusivement à la conformation des canaux d'entrée et de sortie de l'échangeur, dont la forme est standard, et,
- de l'autre, d'une pièce externe interchangeable et adaptée de façon spécifique à la configuration des autres composants de la boucle de climatisation.

Ces deux pièces, qui forment le dispositif de connexion destiné à assurer la fonction d'interfaçage entre l'échangeur de chaleur et les autres composants, peuvent être rapportées l'une contre l'autre au moment de l'intégration dudit dispositif de connexion à la boucle de climatisation, ce qui assure une flexibilité totale dudit dispositif. En effet, quelque soit la forme des orifices des différents composants, les collerettes de la pièce interne sont adaptés à la forme standard de l'échangeur, et il est donc seulement nécessaire de modifier les embouts portés par la pièce externe pour les adapter à la forme desdits orifices.

De préférence, la pièce interne est formée d'une plaque dont l'épaisseur est comprise entre 1 et 3 millimètres.

De préférence également, la pièce externe est formée d'une plaque dont l'épaisseur est comprise entre 1 et 3 millimètres.

Ainsi, on obtient un dispositif de connexion dont l'épaisseur réduite, de même donc que la masse, ce qui allège la fonction intégrée au véhicule.

Selon une forme particulière de réalisation, au moins l'une des pièces interne ou externe est formée par emboutissage, ce qui permet de réaliser facilement lesdites pièces et en particulier la forme des embouts et des collerettes. On comprendra que l'emboutissage impose une épaisseur de pièce faible afin de former les embouts et collerettes.

Selon l'invention, au moins l'une des pièces interne ou externe est munie de moyens de pré-assemblage desdites pièces, ce qui permet de rapporter lesdites pièces l'une contre l'autre avant de procéder à leur assemblage définitif.

Selon une forme particulière de réalisation, les pièces interne et externe sont soudées l'une contre l'autre au niveau de leurs faces internes respectives, ce qui permet de fixer définitivement lesdites pièces et de former un bloc de connexion en définitive monolithique.

Dans ce cas, afin d'améliorer l'étanchéité du dispositif entre les deux pièces lors d'une soudure dans un four, la face interne d'au moins l'une des pièces interne ou externe comprend une couche de brasure, avantageusement laminée, co-laminée ou déposée par enduction.

Selon une forme particulière de réalisation, au moins une collerette de la pièce interne présente un renflement sur une surface supérieure à la section du canal, ce qui favorise le désaxement de l'embout et de la collerette d'un même canal. Ce renflement offre donc une flexibilité dans le placement relatif de la collerette et de l'embout.

Dans ce cas, une collerette de la pièce interne est de préférence désaxée par rapport à un embout de la pièce externe avec lequel il forme un canal, ce qui permet de s'adapter au désaxement de l'embout et de la collerette d'un même canal.

Selon l'invention, les pièces interne et externe sont partiellement solidaires l'une de l'autre par l'intermédiaire de l'une des leurs tranches adjacentes, ce qui offre la possibilité de fabriquer les deux pièces en une même pièce de base, de sorte que celles-ci soient reliées par l'une de leurs tranches adjacentes et que l'on forme le dispositif de connexion par simple repliement des deux pièces l'une sur l'autre. On comprendra que, dans un tel cas, la pièce externe étant solidaire de la pièce interne, la flexibilité offerte par la pièce externe est annihilée, mais c'est alors l'outil de fabrication des pièces (par exemple par emboutissage) qui est adapté pour réaliser la forme souhaitée de la pièce externe (ainsi que celle standard de la pièce interne) en une seule étape à partir d'une plaque de base.

Afin de faciliter le pré-assemblage des deux pièces et plus particulièrement de s'assurer qu'elles ne seront pas déplacées l'une par rapport à l'autre avant leur fixation définitive, une collerette de la pièce interne présente de préférence une forme conique.
Afin de pré-positionner le dispositif de connexion sur l'échangeur, une collerette de la pièce interne présente avantageusement des languettes repliables.
L'une ou l'autre de ces deux solutions garantit ainsi un pré-positionnement du dispositif de connexion sur l'échangeur de chaleur avant son passage dans le four de brasage.

La présente invention concerne également un échangeur de chaleur comprenant au moins un orifice au travers duquel est admis un fluide, remarquable en ce qu'il est muni d'un dispositif de connexion conforme à l'une des modes de réalisation ci-dessus.

D'autres caractéristiques et avantages de l'invention apparaîtront lors de la description qui suit faite en regard du dessin annexé, donné à titre d'exemple non limitatif, dans lequel :
- la figure 1 est une vue schématique de certains composants d'une boucle de climatisation selon l'art antérieur ;
- la figure 2 est une vue schématique de la pièce interne d'un dispositif de connexion selon une première forme de réalisation ;
- la figure 3 est une vue schématique de la pièce externe d'un dispositif de connexion selon cette première forme de réalisation ;
- la figure 4 est une vue schématique du dispositif de connexion formé par les pièces interne et externe des figures 2 et 3 ;
- la figure 5 est une vue schématique de la pièce interne d'un dispositif de connexion selon l'invention;
- la figure 6 est une vue schématique de la pièce externe d'un dispositif de connexion selon l'invention;
- la figure 7 est une vue schématique du dispositif de connexion formé par les pièces interne et externe des figures 5 et 6.

Sur ces figures, des références identiques désignent des éléments techniques semblables.

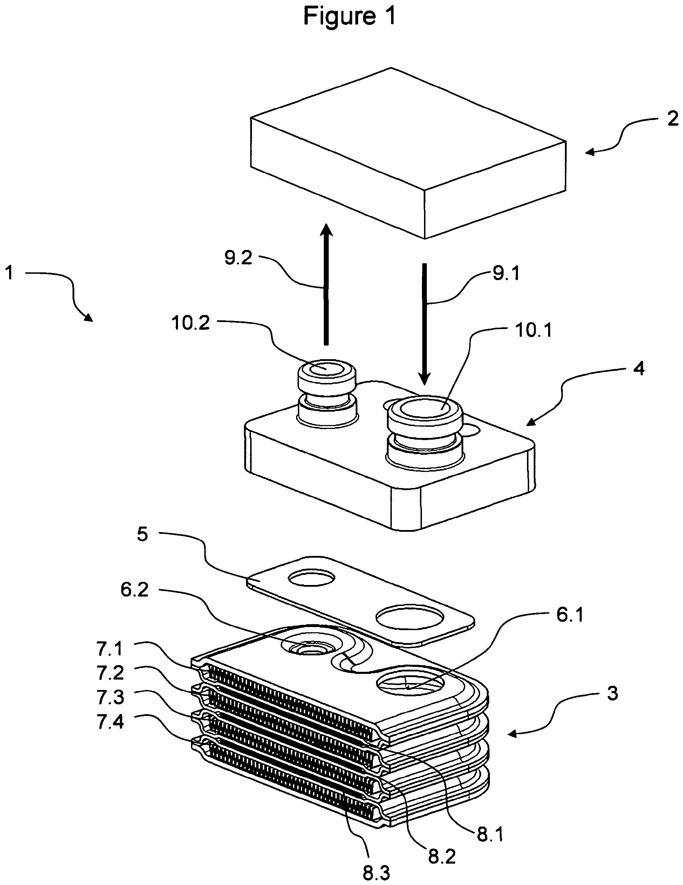

La boucle de climatisation 1 est composée de composants tels que par exemple un condenseur, un évaporateur ou un détendeur, ainsi qu'un échangeur de chaleur 3 sur lequel est installé un dispositif de connexion 4 entre le composant 2 et l'échangeur 3 tels qu'illustrés sur la figure 1.

L'échangeur de chaleur 3 comporte un orifice de sortie 6.2 et un orifice d'entrée 6.1, ainsi qu'un ensemble de conduits de circulation basse pression 7.1, 7.2, 7.3, 7.4 et haute pression 8.1, 8.2, 8.3. L'orifice de sortie 6.2 permet de faire sortir un fluide porté à haute pression 9.2 en provenance du condenseur, par l'intermédiaire du canal de sortie 10.2 du dispositif de connexion 4, tandis que l'orifice d'entrée 6.1 permet de faire entrer un fluide à basse pression 9.1 en provenance de l'évaporateur ou du détendeur, par l'intermédiaire du canal d'entrée 10.1 de ce même dispositif 4.

Le dispositif de connexion 4 de la figure 1 correspond à une forme de réalisation de l'art antérieur, pour laquelle il se présente sous la forme d'un bloc monolithique en aluminium dans lequel est pratiqué les deux canaux de sortie 10.2 et d'entrée 10.1. L'aspect monolithique de ce dispositif de connexion le rend inapte à la standardisation des boucles de climatisation. De plus il s'agit d'une pièce particulièrement lourde et coûteuse. Enfin, le caractère monolithique du dispositif de connexion de l'art antérieur ne permet pas d'installer une couche de brasure. Il est donc nécessaire de prévoir un composant supplémentaire 5 et une étape de fabrication supplémentaire pour assurer la fonction d'étanchéité entre le dispositif de connexion de l'art antérieur et l'échangeur.

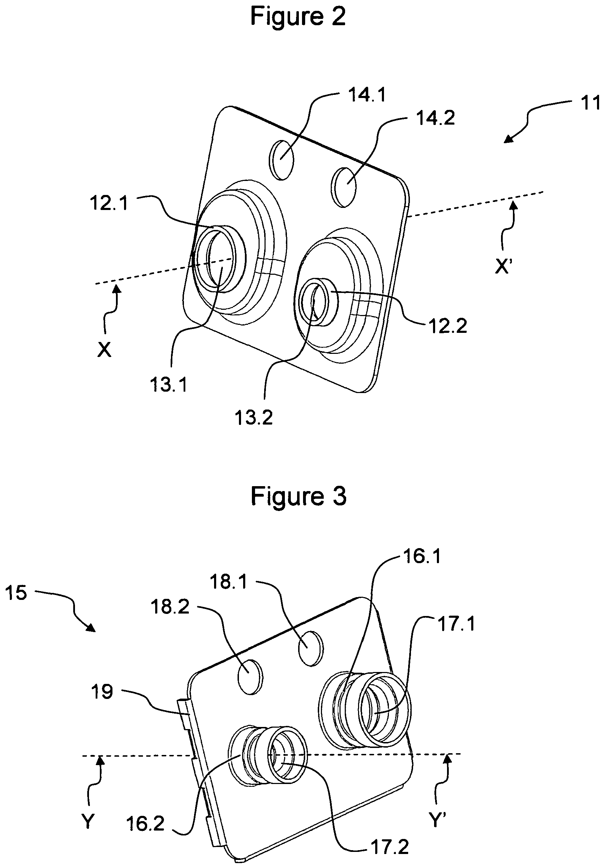

Selon une première forme de réalisation de l'invention, illustrée par les figures 2 à 4, le dispositif de connexion 4 est formé d'une pièce interne (figure 2) et d'une pièce externe (figure 3). Les termes interne et externe utilisés font prennent comme référence le dispositif de connexion. Le mot Interne qualifie donc un composant ou un canal côté échangeur sur lequel est monté le dispositif de connexion et externe qualifie les composants ou canaux côté boucle de climatisation, à l'opposé de l'échangeur par rapport au dispositif de connexion.

La pièce interne 11 porte deux collerettes 12.1 (d'entrée) et 12.2 (de sortie) formant les parties internes respectivement 13.1 et 13.2 des canaux de sortie 10.2 et d'entrée 10.1 du dispositif de connexion 4. Ces deux collerettes 12.1 et 12.2 présentent des formes adaptées à celles des orifices 6.1 et 6.2 de l'échangeur 3. Dans l'exemple de la figure 2, ces collerettes présentent une forme circulaire. Ainsi, la forme de ces orifices étant standard, la pièce interne 11 peut être également une pièce standard.

Deux trous 14.1 et 14.2 sont également ménagés dans la pièce interne 11, ces trous étant destinés à coopérer avec des trous identiques pratiqués sur la pièce externe 15.

La pièce externe 15 porte deux embouts 16.1 (d'entrée) et 16.2 (de sortie) formant les parties externes respectivement 17.1 et 17.2 des canaux de sortie 10.2 et d'entrée 10.1 du dispositif de connexion 4. Ces deux embouts présentent des formes adaptées, en particulier une rainure périphérique, pour recevoir au choix des joints des composants de la boucle de climatisation, par exemple des tubes ou conduites de transport du fluide, ou encore recevoir le détendeur. Ainsi, la pièce externe 15 peut être une pièce spécifiquement conçue pour une configuration particulière de ces composants (tube ou détendeur par exemple).

Deux trous 18.1 et 18.2 sont également ménagés dans la pièce externe 15, ces trous étant identiques aux trous 14.1 et 14.2 et destinés à coopérer avec ces derniers, en vue de servir au passage de vis de fixation d'un détendeur thermostatique sur le dispositif de connexion 4.

Des moyens périphériques de pré-assemblage 19 sont également disposés sur trois des côtés de la pièce externe 15, pour assurer le positionnement relatif des pièces interne 11 et externe 15 avant leur fixation définitive l'une contre l'autre. Ces moyens de pré-assemblage 19 peuvent se présenter sous la forme d'éléments flexibles tels que des languettes, ou des dents pliées, ou encore l'alternance de celles-ci. Selon d'autres variantes, les moyens de pré-assemblage 19 peuvent revêtir d'autres formes ou être disposés sur un nombre différent de côtés, dans la mesure où deux côtés opposés en sont munis. Alternativement, ces moyens de pré-assemblage peuvent être prévus sur la pièce interne 11 seulement. Alternativement, ces moyens de pré-assemblage peuvent être prévus à la fois sur la pièce interne 11 et sur la pièce externe 15.

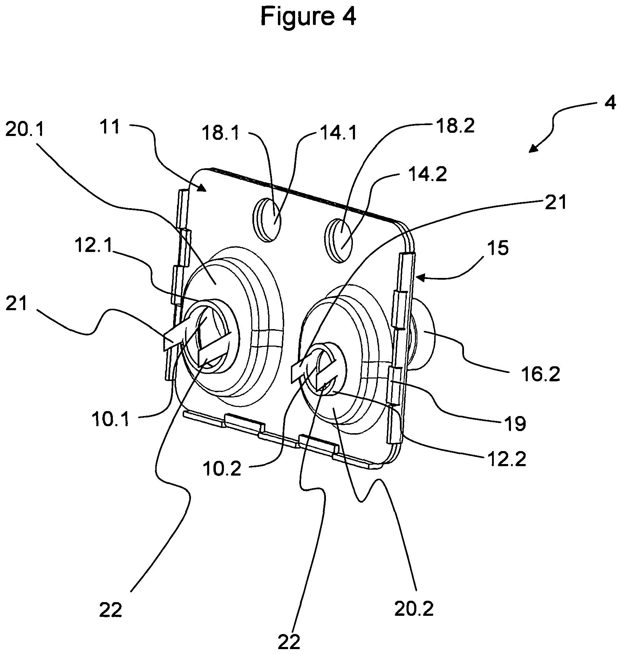

Les pièces interne 11 et externe 15 sont destinées à être rapportées l'une contre l'autre pour former le dispositif de connexion 4 de la figure 4. Dans ce cas, les deux pièces sont pré-assemblées par l'intermédiaire des moyens de pré-assemblage 19, puis elles sont fixées ou solidarisées l'une contre l'autre par soudure de leurs faces internes respectives, une couche de brasure pouvant être prévues entre la pièce interne 11 et la pièce externe 15 afin d'assurer une parfaite étanchéité au niveau de leur raccordement. Pour cela, la paroi interne de l'une des deux pièces présente une couche de brasure laminée, co-laminée ou enduite.

Les canaux de sortie 10.2 et d'entrée 10.1 sont ainsi reformés par juxtaposition des collerettes et embouts respectivement d'entrée 12.1, 16.1 et de sortie 12.2, 16.2. A cet égard, on notera que la paroi interne 11 comprend un premier renflement 20.1 au niveau de la collerette d'entrée 12.1 et un second renflement 20.2 au niveau de la collerette de sortie 12.2. Chacun de ces renflements forme une chambre de réception du fluide, ce qui permet de faire en sorte que les canaux 10.1 et 10.2 puissent présenter un certain désaxement, les axes X-X' et Y-Y' respectivement des embouts et des collerettes n'étant pas confondus après l'assemblage du dispositif de connexion. De par leurs surfaces qui couvrent une surface supérieure à celle des embouts, ces chambres formées par les renflements 20.1 et 20.2 assurent en effet une fonction d'absorption du désaxement consécutif à la flexibilité dans la position des embouts. L'embout peut donc être positionné de façon personnalisée, pour une collerette standard, afin d'ajuster le désaxement. Ce renflement délimite une chambre de forme ovoïde comprenant un fond au travers duquel est installée la collerette. Les dimensions extérieures du renflement sont supérieures aux dimensions extérieures de la collerette concernée.

Une fois le dispositif de connexion 4 ainsi formé, il peut être assemblé à l'échangeur 3, de manière que les canaux 10.1 et 10.2 soient disposés en regard des orifices respectivement d'entrée 6.1 et de sortie 6.2 dudit échangeur.

Ce dispositif de connexion 4 permet donc d'éviter les inconvénients qu'engendrent les conceptions monolithiques de l'art antérieur en termes de flexibilité et de coûts de fabrication, puisque seule la pièce externe est à adapter en fonction des configurations de la boucle de climatisation, tandis que la pièce interne peut être une pièce standard adaptée à la forme elle-même standard de l'échangeur.

En outre, ce dispositif de connexion 4 permet de choisir la différence d'alignement au sein d'un même canal, en fonction de la position, du diamètre et de la forme des embouts sur la pièce externe. En effet, partant d'une pièce interne standard et afin de modifier cette différence d'alignement, il suffit grâce à l'invention de n'agir que sur les positions, les formes et les diamètres des embouts externes, donc uniquement sur la pièce externe.

On note que la fabrication de telles pièces interne 11 et externe 15 est à la portée de l'homme du métier. Celles-ci peuvent en effet être réalisées par exemple en aluminium, par estampage ou emboutissage de plaques d'épaisseur fine, préférentiellement comprise entre 1 et 3 millimètres. De par leur minceur, ces plaques sont aptes à être embouties par un outil de presse pour y former les collerettes et embouts. L'emboutissage pratiqué sur ces plaques peut être de type simple ou profond.

Des languettes repliables 21 et 22 peuvent également être disposées au niveau des extrémités libres des collerettes 12.1 et 12.2 afin de faciliter le pré-positionnement de celles-ci au droit des orifices 6.1 et 6.2 de l'échangeur 3. Ces languettes 21 et 22 sont repliées à l'intérieur de la plaque qui reçoit le dispositif de connexion de sorte garantir un positionnement de la pièce interne vis-à-vis de l'échangeur et empêcher que cette pièce ne bouge ou tombe pendant l'étape de soudage ou brasage au four.

De manière alternative, l'une des collerettes, et éventuellement les deux, peut prendre une forme de cône pour venir se coincer dans les orifices d'entrée 6.1 ou de sortie 6.2. On assure ainsi un maintien mécanique de la pièce interne 11 sur l'échangeur 3 de sorte à garantir un pré-positionnement de ces éléments avant passage dans le four pour l'étape de brasage.

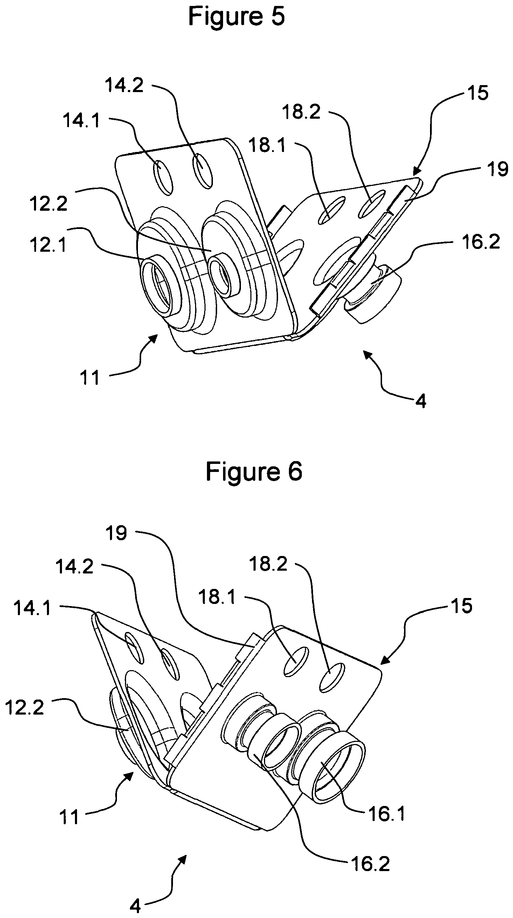

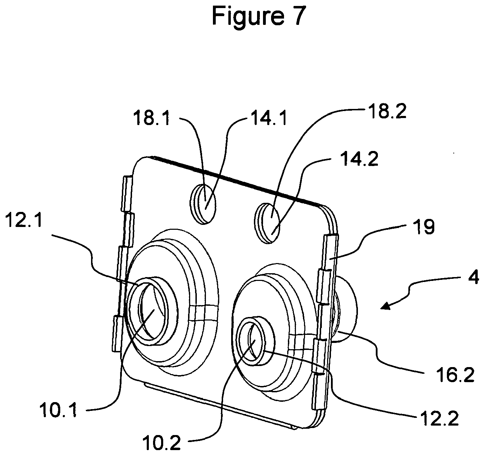

Selon l'invention, le dispositif de connexion 4 illustré par les figures 5 à 7 est toujours formé d'une pièce interne 11 et d'une pièce externe 15, celles-ci sont partiellement solidaires l'une de l'autre, et plus particulièrement solidaires au niveau d'un seul de leurs côtés.

Ainsi, lorsque les pièces interne 11 et externe 15 ne sont pas encore rapportées l'une contre l'autre (figures 5 et 6), celles-ci sont fixées l'une à l'autre par leur tranche ou côté adjacent inférieur (ou par un autre côté selon les variantes de mise en oeuvre envisagées). Il suffit ensuite de rapporter la pièce interne 11 et la pièce externe 15 l'une contre l'autre par simple pivotement autour de ce côté inférieur par lequel elles sont déjà solidarisées.

On note en outre qu'un autre avantage de la présente invention réside dans la possibilité de réaliser un dispositif de connexion de faible épaisseur, par exemple comprise entre 1 et 3 millimètres (en dehors des canaux d'entrée et de sortie). En effet, il importe, pour que la différence d'alignement soit opérée efficacement entre les deux extrémités de chaque canal, que cette différence soit réalisée sur une longueur suffisante. Or, selon un aspect supplémentaire de l'invention, il peut être fabriqué des pièces interne et externe de faible épaisseur, avec des embouts internes et externes en saillie desdites pièces. On réalise donc bien une différence d'alignement sur une grande longueur, tout en disposant d'un dispositif de connexion dont l'épaisseur globale, correspondant à la somme des faibles épaisseurs de la pièce interne et de la pièce externe, est faible. Ainsi, le volume et la masse du dispositif de connexion peuvent être réduits de façon significative.

Le fluide décrit ci-dessus peut être, par exemple un fluide frigorigène circulant dans la boucle de climatisation pour le cas où l'échangeur sur lequel est monté le dispositif de connexion est un échangeur de chaleur interne. La portée de l'invention couvre également le cas où le dispositif de connexion est utilisé pour assurer le transport d'un fluide caloporteur comme de l'eau additionné de glycol. C'est notamment le cas d'un échangeur fluide frigorigène/fluide caloporteur.

L'invention a été décrite ci-dessus pour un dispositif de connexion formé uniquement de deux pièces rapportées l'une contre l'autre, mais il va de soi que l'homme du métier saura l'adapter dans le cas d'un nombre supérieur de pièces à assembler pour former le dispositif de connexion. En particulier, il est possible par exemple de former l'une des pièces par deux sous-pièces, chacune portant l'un des embouts (d'entrée ou de sortie), ces deux sous-pièces étant ensuite assemblées pour obtenir la pièce en question.

Le dispositif de connexion selon l'invention est particulièrement adapté pour établir le raccordement fluidique entre un échangeur de chaleur interne et un dispositif de détente ou détendeur. L'invention couvre donc également un sous-ensemble comprenant un échangeur de chaleur interne et un détendeur, avantageusement thermostatique, raccordé l'un à l'autre par un dispositif de connexion ou raccordement tel que décrit ci-dessus.

## Revendications

1. Dispositif de connexion (4) entre un composant (2) d'une boucle de climatisation (1) et un échangeur de chaleur (3) comprenant au moins un canal (10.1, 10.2) apte à être parcouru par un fluide (9.1, 9.2),
ledit composant (2) étant des tubes ou conduites de transport d'un fluide, ou encore un détendeur,
lequel comprend :
- une pièce interne (11) portant au moins une collerette (12.1, 12.2) délimitant au moins en partie ledit canal (10.1, 10.2) et apte à coopérer avec un orifice (6.1, 6.2) dudit échangeur (3), et
- une pièce externe (15), rapportée contre la pièce interne (11), qui porte au moins un embout (16.1, 16.2) délimitant en partie ledit canal (10.1, 10.2) et apte à coopérer avec un orifice dudit composant (2),
dans lequel au moins l'une des pièces interne (11) ou externe (15) est munie de moyens de pré-assemblage (19) desdites pièces (11, 15) l'une contre l'autre **caractérisé en ce que** les pièces interne (11) et externe (15) sont partiellement solidaires l'une de l'autre par l'intermédiaire de l'une des leurs tranches adjacentes.

2. Dispositif de connexion selon la revendication 1, dans lequel la pièce interne (11) est formée d'une plaque dont l'épaisseur est comprise entre 1 et 3 millimètres.

3. Dispositif de connexion selon l'une des revendications 1 ou 2, dans lequel la pièce externe (15) est formée d'une plaque dont l'épaisseur est comprise entre 1 et 3 millimètres.

4. Dispositif de connexion selon l'une des revendications 1 à 3, dans lequel au moins l'une des pièces interne (11) ou externe (15) est formée par emboutissage.

5. Dispositif de connexion selon l'une des revendications précédentes, dans lequel les pièces interne (11) et externe (15) sont soudées l'une contre l'autre au niveau de leurs faces internes respectives.

6. Dispositif de connexion selon l'une des revendications précédentes, dans lequel la pièce interne (11) présente un renflement (20.1, 20.2) au droit d'au moins une collerette (12.1, 12.2).

7. Dispositif de connexion selon l'une des revendications précédentes, dans lequel une collerette (12.1, 12.2) de la pièce interne (11) est désaxée par rapport à un embout (16.1, 16.2) de la pièce externe (15) avec lequel il forme un canal (10.1, 10.2).

8. Echangeur de chaleur (3) comprenant au moins un orifice au travers duquel est admis un fluide, **caractérisé en ce qu'**il est muni d'un dispositif de connexion (4) conforme à l'une des revendications précédentes.

9. Sous-ensemble comprenant un échangeur de chaleur interne (3) et un dispositif de détente **caractérisé en ce qu'**ils sont raccordés l'un à l'autre par un dispositif de connexion selon l'une quelconque des revendications 1 à 7.

## Patentansprüche

1. Verbindungsvorrichtung (4) zwischen einem Bestandteil (2) eines Klimatisierungskreislaufs (1) und einem Wärmetauscher (3), die mindestens einen Kanal (10.1, 10.2) enthält, der von einem Fluid (9.1, 9.2) durchströmt werden kann,
wobei der Bestandteil (2) Transportrohre oder -leitungen eines Fluids oder auch ein Expansionsventil sind,
die enthält:
- ein inneres Bauteil (11), das mindestens einen Kragen (12.1, 12.2) trägt, der zumindest zum Teil den Kanal (10.1, 10.2) begrenzt und mit einer Öffnung (6.1, 6.2) des Tauschers (3) zusammenwirken kann, und
- ein gegen das innere Bauteil (11) angesetztes äußeres Bauteil (15), das mindestens einen Aufsatz (16.1, 16.2) trägt, der zum Teil den Kanal (10.1, 10.2) begrenzt und mit einer Öffnung des Bestandteils (2) zusammenwirken kann,
wobei mindestens eines der inneren (11) oder äußeren (12) Bauteile mit Vormontageeinrichtungen (19) der Bauteile (11, 15) gegeneinander ausgestattet ist, **dadurch gekennzeichnet, dass** die inneren (11) und äußeren (12) Bauteile teilweise mittels eines ihrer benachbarten Abschnitte fest miteinander verbunden sind.

2. Verbindungsvorrichtung nach Anspruch 1, wobei das innere Bauteil (11) von einer Platte gebildet wird, deren Dicke zwischen 1 und 3 Millimeter liegt.

3. Verbindungsvorrichtung nach einem der Ansprüche 1 oder 2, wobei das äußere Bauteil (15) von einer Platte gebildet wird, deren Dicke zwischen 1 und 3 Millimeter liegt.

4. Verbindungsvorrichtung nach einem der Ansprüche 1 bis 3, wobei mindestens eines der inneren (11) oder äußeren (15) Bauteile durch Tiefziehen geformt wird.

5. Verbindungsvorrichtung nach einem der vorhergehenden Ansprüche, wobei die inneren (11) und äußeren (15) Bauteile im Bereich ihrer jeweiligen Innenseiten aneinander geschweißt sind.

6. Verbindungsvorrichtung nach einem der vorhergehenden Ansprüche, wobei das innere Bauteil (11) eine Verdickung (20.1, 20.2) gegenüber mindestens einem Kragen (12.1, 12.2) aufweist.

7. Verbindungsvorrichtung nach einem der vorhergehenden Ansprüche, wobei ein Kragen (12.1, 12.2) des inneren Bauteils (11) bezüglich eines Aufsatzes (16.1, 16.2) des äußeren Bauteils (15) axial verschoben ist, mit dem es einen Kanal (10.1, 10.2) bildet.

8. Wärmetauscher (3), der mindestens eine Öffnung enthält, durch die hindurch ein Fluid eingelassen wird, **dadurch gekennzeichnet, dass** er mit einer Verbindungsvorrichtung (4) nach einem der vorhergehenden Ansprüche ausgestattet ist.

9. Teileinheit, die einen inneren Wärmetauscher (3) und eine Expansionsvorrichtung enthält, **dadurch gekennzeichnet, dass** sie durch eine Verbindungsvorrichtung nach einem der Ansprüche 1 bis 7 aneinander angeschlossen sind.

## Claims

1. Connection device (4) between a component (2) of an air conditioning loop (1) and a heat exchanger (3) including at least one channel (10.1, 10.2) adapted to have a fluid (9.1, 9.2) flow through it, said component (2) being fluid transport tubes or channels, or an expander, which device includes:
- an internal part (11) carrying at least one flange (12.1, 12.2) delimiting said channel (10.1, 10.2) at least in part and adapted to cooperate with an orifice (6.1, 6.2) of said exchanger (3), and
- an external part (15), fastened against the internal part (11), which carries at least one nozzle (16.1, 16.2) delimiting said channel (10.1, 10.2) in part and adapted to cooperate with an orifice of said component (2),
wherein at least one of the internal part (11) or the external part (15) is provided with means (19) for the pre-assembly of said parts (11, 15) one against the other, **characterized in that** the internal part (11) and the external part (15) are partially fastened together by one of their adjacent edge surfaces.

2. Connection device according to Claim 1, wherein the internal part (11) is formed of a plate the thickness of which is between 1 and 3 millimeters.

3. Connection device according to either of Claims 1 and 2, wherein the external part (15) is formed of a plate the thickness of which is between 1 and 3 millimeters.

4. Connection device according to any one of Claims 1 to 3, wherein at least one of the internal part (11) or the external part (15) is formed by drawing.

5. Connection device according to any one of the preceding claims, wherein the internal part (11) and the external part (15) are welded one against the other at the level of their respective internal faces.

6. Connection device according to any one of the preceding claims, wherein the internal part (11) has an enlargement (20.1, 20.2) in line with at least one flange (12.1, 12.2).

7. Connection device according to any one of the preceding claims, wherein a flange (12.1, 12.2) of the internal part (11) is off-axis relative to a nozzle (16.1, 16.2) of the external part (15) with which it forms a channel (10.1, 10.2).

8. Heat exchanger (3) including at least one orifice through which a fluid is admitted, **characterized in that** it is provided with a connection device (4) according to any one of the preceding claims.

9. Sub-assembly comprising an internal heat exchanger (3) and an expansion device, **characterized in that** they are connected to each other by a connection device according to any one of Claims 1 to 7.
